# EUROPÄISCHE PATENTSCHRIFT

(11) **EP 1 357 142 B1**
(45) Veröffentlichungstag und Bekanntmachung des Hinweises auf die Patenterteilung: **26.01.2005**
(21) Anmeldenummer: 03008043.6
(22) Anmeldetag: 14.04.2003
(51) Int. Cl.: C08G 65/12, C08F 4/42, C08G 65/26, C07F 7/00, B01J 31/22, B01J 31/12

(54) **Katalysatoren zur Polymerisation von Alkylenoxiden**
Catalysts for the polymerisation of alkylene oxides
Catalysateurs pour la polymérisation d'oxydes d'alkylène

(30) Priorität: 26.04.2002 DE 10218583
(43) Veröffentlichungstag der Anmeldung: 29.10.2003
(73) Patentinhaber: Bayer MaterialScience AG, 51368 Leverkusen (DE)
(72) Erfinder: Erker, Grehard, Prof. Dr., 48159 Münster (DE); Snell, Alexander, 84503 Altötting (DE)

(56) Entgegenhaltungen:
- F. TEIXIDOR, A. LLOBET, L. ESCRICHE, J. CASABO: POLYHEDRON, Bd. 4, Nr. 2, 1985, Seiten 215-219, XP008021942
- F. TEIXIDOR, F. FLOR, J. CASABO: INORG. CHIM. ACTA, Bd. 118, 1986, Seiten 125-128, XP008021940
- J. CASABO, J. COLOMER, L. ESCRICHE, F. TEIXIDOR, E. MOLINS, C. MIRAVITLLES: INORG. CHIM. ACTA, Bd. 178, 1990, Seiten 221-226, XP008021939
- F. TEIXIDOR, A. LLOBET, L. ESCRICHE, J. CASABO: POLYHEDRON, Bd. 3, 1984, Seiten 1017-1019, XP008021941
- SNELL, ALEXANDER H.: "Neuartige Gruppe-4-Metallkomplexe für die Polymerisation von polaren und unpolaren Monomeren, Dissertation Universität Münster" 24. Juni 2002 (2002-06-24) , MIAMI, UNIVERSITÄTS- UND LANDESBIBLIOTHEK MÜNSTER , MÜNSTER XP002255161 * Seite 6-27 * * Seite 55-69 *

## Beschreibung

Die Erfindung betrifft neue koordinative Katalysatoren zur Polymerisation von Alkylenoxiden.

Polyalkylenoxide, die durch Polymerisation von Alkylenoxiden, wie z.B. Ethylenoxid, Propylenoxid oder 1,2-Butylenoxid zugänglich sind, werden kommerziell in einer Vielzahl von Anwendungen eingesetzt, wie beispielsweise als nichtionische Tenside, Schmiermittel, Bremsflüssigkeiten oder Hydraulikflüssigkeiten. Wird die Polymerisation der Alkylenoxide in Gegenwart von aktive Wasserstoffatome aufweisenden Starterverbindungen durchgeführt, so werden Polyetherpolyole erhalten, die in großem Umfang zur Herstellung von Polyurethan-Werkstoffen, wie z.B. Lacken, Dichtstoffen, Elastomeren oder Schäumen verwendet werden.

Die Polymerisation der Alkylenoxide kann basisch, sauer oder koordinativ katalysiert werden. Als basische Katalysatoren zur Polymerisation von Alkylenoxiden werden technisch überwiegend Alkalihydroxide (z.B. KOH) eingesetzt. Nachteilig bei der durch Alkalihydroxide katalysierten Polymerisation sind die langen Reaktionszeiten und die sehr aufwendige Produktaufarbeitung zur Abtrennung des basischen Katalysators. Problematisch ist außerdem die als Nebenreaktion ablaufende basenkatalysierte Umlagerung von Alkylenoxiden, beispielsweise Propylenoxid, zu Allyl- bzw. Propenylalkoholen, die bei der Polyetherpolyolherstellung zu monofunktionellen, ungesättigten Polyethern mit endständiger Doppelbindung, sog. Monoolen, führt. Da der Monoolanteil mit steigender Molmasse des Polyethers stark zunimmt, ist bei der Polyetherpolyolherstellung mittels KOH-Katalyse die Äquivalentmolmasse (zahlenmittlere Molmasse/Funktionalität) auf etwa 2.000 g/mol beschränkt.

Neben der basischen Katalyse ist für die Polymerisation von Alkylenoxiden seit langem auch die saure Katalyse, insbesondere mit Lewis-Säuren, wie beispielsweise Bortrifluorid, bekannt. Die saure Katalyse hat den Nachteil, dass sie Nebenreaktionen (z.B. die Bildung flüchtiger, niedermolekularer Ringether wie Dioxane oder Dioxolane) in erhöhtem Maße begünstigt, so dass im Allgemeinen nur Produkte mit zahlenmittleren Molmassen bis etwa 1.000 g/mol erhalten werden können, und dass die Molmassenverteilung der Polyalkylenoxide breiter ist als bei den durch Basenkatalyse hergestellten Produkten.

Koordinative Katalysatoren zur Polymerisation von Alkylenoxiden sind ebenfalls seit längerer Zeit bekannt. Die ersten zur koordinativen Polymerisation von Alkylenoxiden beschriebenen Katalysatoren waren Eisenchlorid sowie Diethylzink und verschiedene Trialkylaluminiumverbindungen mit Zusätzen und Cokatalysatoren. Nachteilig bei diesen ersten koordinativen Katalysatoren zur Alkylenoxid-Polymerisation waren deren relativ geringe Aktivität und die schwierige Abtrennung aus dem Produkt. Da bei diesen Katalysatorsystemen der Kettenaustausch zwischen der wachsenden Polyalkylenoxidkette und einer zugegebenen Starterverbindung sehr langsam ist, kann die Molmasse der Polymere und häufig auch die Endgruppenfunktionalität nicht wirksam kontrolliert werden, was die Produkte für Polyurethan-Anwendungen ungeeignet macht. Außerdem liefern diese Katalysatorsysteme teilweise Anteile stereoregulärer Polyether.

Porphyrinkomplexe von Aluminium, Zink und Mangan katalysieren ebenfalls die Polymerisation von Alkylenoxiden nach einem koordinativen Mechanismus (siehe z.B. EP-A 195 951, EP-A 510 602, US-A 5 328 970). Die erhaltenen Polyalkylenoxide sind ataktisch und besitzen eine enge Molmassenverteilung. Ein generelles Problem beim Einsatz dieser Metallporphyrinkomplexe ist allerdings die vollständige Abtrennung der stark gefärbten Katalysatorsysteme aus dem Produkt. Da die Präparation der Katalysatoren zudem sehr aufwendig ist, sind Metallporphyrine aus wirtschaftlichen Gründen für die Herstellung von Polyalkylenoxiden im technischen Maßstab ungeeignet.

Doppelmetallcyanid(DMC)-Katalysatoren auf Basis von Zinkhexacyanocobaltat sind nach Modifizierung mit geeigneten organischen Komplexliganden sehr effektive Katalysatoren zur koordinativen Alkylenoxid-Polymerisation (s. z.B. US-A 3 404 109, US-A 3 829 505, US-A 3 941 849, US-A 5 158 922, US-A 5 470 813). Durch Einsatz hochaktiver DMC-Katalysatoren werden ataktische Polyalkylenoxide mit sehr engen Molmassenverteilungen und außerordentlich niedrigen Gehalten an ungesättigten Nebenprodukten erhalten. DMC-Katalysatoren haben allerdings den Nachteil, dass sie keine kontrollierte Polymerisation von Ethylenoxid gestatten und damit auch nicht die Herstellung von Polyethylenoxiden bzw. von Polyalkylenoxid-Blockcopolymeren mit Ethylenoxidblöcken. Zudem verursacht die für DMC-Katalyse charakteristische Induktionsperiode zu Beginn der Polymerisation häufig verfahrenstechnische Probleme, insbesondere bei der Prozessführung in großtechnischen Maßstab.

Verbesserte Katalysatorsysteme für die koordinative Polymerisation von Alkylenoxiden, die zu ataktischen Polyalkylenoxiden mit enger Molmassenverteilung und niedrigen Anteilen ungesättigter Nebenprodukte führen, sind daher von großem Interesse.

Es wurde nun gefunden, dass bestimmte neuartige Metallkomplexverbindungen sehr effektive Katalysatoren für die koordinative Polymerisation von Alkylenoxiden sind, durch deren Einsatz ataktische Polyalkylenoxide mit engen Molmassenverteilungen und sehr niedrigen Anteilen unerwünschter Nebenprodukte erhalten werden. Die Alkylenoxid-Polymerisation mit diesen neuen koordinativen Katalysatoren verläuft ohne Induktionsperiode und ist daher verfahrenstechnisch ohne Probleme durchführbar.

Gegenstand der vorliegenden Erfindung sind daher neue koordinative Katalysatoren zur Alkylenoxid-Polymerisation der allgemeinen Formel (I) 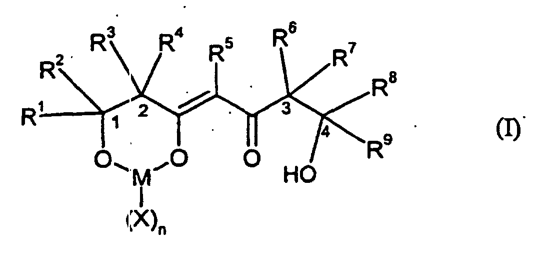 in der
- R¹ - R⁹: gleiche oder verschiedene Reste sein können und unabhängig voneinander H, eine substituierte oder unsubstituierte, lineare oder verzweigte C₁-C₂₀-Alkylgruppe, eine substituierte oder unsubstituierte C₅-C₂₀-Arylgruppe, eine substituierte oder unsubstituierte C₅-C₂₀-Aralkylgruppe, eine Acylgruppe, eine Alkoxidgruppe, F, Cl, Br, I, CN, oder NO₂ bedeuten. R¹ bis R⁴ sowie R⁶ bis R⁹ können auch gemeinsam mit C₁ und C₂ bzw. C₃ und C₄ aromatische Ringsysteme bilden. R² und R³ bzw. R⁷ und R⁸ können auch Bestandteil eines C₃-C₂₀-cycloaliphatischen Ringsystems, wie z.B. Cyclohexyl, sein.
- M: ist ein Metall in der Oxidationsstufe II - VII.
- X: bedeutet F, Cl, Br, I, H, CN, eine substituierte oder unsubstituierte, lineare oder verzweigte C₁-C₂₀-Akylgruppe, eine substituierte oder unsubstituinerte C₅-C₂₀-Arylgruppe, eine substituierte oder unsubstituierte C₅-C₂₀-Aralkylgruppe, eine Acylgruppe, eine Alkoxidgruppe, eine Thiolatgruppe oder eine Dialkylaminogruppe. Gegebenenfalls können 2 oder mehr der Gruppen X auch verbrückt sein, bevorzugt über eine Alkylenbrücke. Für n ≥ 2 können die Gruppen X gleich oder verschieden sein. X ist bevorzugt F, Cl, Br, I, besonders bevorzugt Cl.
- n: ist 0, 1, 2, 3, 4 oder 5, wobei n so gewählt wird, dass die Elektroneutralität der Metallkomplexverbindung gewährleistet ist.

Wenn M in der Oxidationsstufe II vorliegt, so wird n = 0. Beispiele sind Sn(II), Pb(II), Zn(II), Cd(II), Hg(II), Fe(II), Co(II), Ni(II), Ca(II), Sr(II), Ba(II), Cr(II), Mn(II), Cu(II), Pd(II), pt(II) und V(II)

Wenn M in der Oxidationsstufe III vorliegt, so wird n = 1. Beispiele sind Al(III), Ti(III), Co(III), Fe(III), Au(III), V(III), Cr(III), Sc(III), Y(III), La(III), Pr(III), Nd(III), Sm(III), Eu(III), Gd(III), Tb(III), Dy(III), Ho(III), Er(III), Tm(III), Yb(III) und Lu(III).

Wenn M in der Oxidationsstufe IV vorliegt, so wird n = 2. Beispiele sind Ti(IV), Zr(IV), Hf(IV), Sn(IV), Mo(IV), V(IV) und W(IV).

Wenn M in der Oxidationsstufe V vorliegt, so wird n = 3. Beispiele sind V(V), Nb(V) und Ta(V).

Wenn M in der Oxidationsstufe VI vorliegt, so wird n = 4. Beispiele sind Cr(VI), Mo(VI), W(VI) und Re(VI).

Wenn M in der Oxidationsstufe VII vorliegt, so wird n = 5. Beispiele sind Tc(VII) und Re(VII).

Bevorzugt eingesetzt werden Metallkomplexverbindungen der allgemeinen Formel (I) mit Metallen M in der Oxidationsstufe II, III und IV. Besonders bevorzugt sind Zn(II), Al(III), Ti(IV), Zr(IV) und Hf(IV).

Bevorzugt sind Katalysatorsysteme, bei denen C₁ und C₂ bzw. C₃ und C₄ in Formel (I) jeweils Bestandteile eines aromatischen Ringsystems, wie z.B. eines Phenyl-, Naphthyl-, Pyridyl- oder Thiophenylrings sind. Bevorzugt sind insbesondere Katalysatorsysteme der allgemeinen Formel (II) 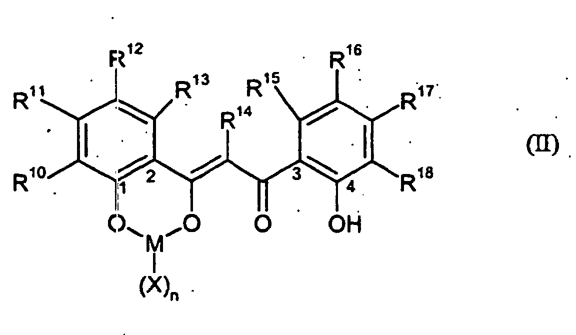 in der
- R¹⁰-R¹⁸: gleiche oder verschiedene Reste sein können und unabhängig voneinander H, eine substituierte oder unsubstituierte, lineare oder verzweigte C₁-C₂₀-Alkylgruppe, eine substituierte oder unsubstituierte C₅-C₂₀-Arylgruppe, eine substituierte oder unsubstituierte C₅-C₂₀-Aralkylgruppe, eine Acylgruppe, eine Alkoxidgruppe, eine Thiolatgruppe, F, Cl, Br, I, CN, NO₂, sowie Bestandteile ankondensierter cycloaliphatischer oder aromatischer Ringsysteme mit 3-20 C-Atomen sind. Bevorzugt sind R¹⁰ bis R¹⁸ H, lineare oder verzweigte C₁-C₆-Alkylgruppen, F, Cl, Br, I oder Bestandteile ankondensierter cycloaliphatischer oder aromatischer Ringsysteme mit 3-15 C-Atomen.
- M, X und n: die in Formel (I) definierte Bedeutung haben. Bevorzugt sind Verbindungen, die Metalle M in der Oxidationsstufe II, III und IV enthalten, besonders bevorzugt solche, in denen M Zn(II), Al(III), Ti(IV), Zr(IV) oder Hf(IV) ist. X ist bevorzugt F, Cl, Br, I, besonders bevorzugt Cl.

Die Synthese der Katalysatoren erfolgt im Allgemeinen in einfacher Weise durch Umsetzung geeigneter Metallverbindungen (z.B. Titantetrachlorid für M = Ti(IV), n = 2 und X = Cl in Formel (II)) mit Ligandvorstufen (z.B. 1,3-Bis(2-hydroxyphenyl)-1,3-propandion für R¹⁰-R¹⁸ = H in Formel (II)).

Die erfindungsgemäßen Katalysatoren werden für die koordinative Polymerisation von Alkylenoxiden eingesetzt.

Geeignete Alkylenoxide sind beispielsweise Ethylenoxid, Propylenoxid, 1,2-Butylenoxid, 2,3-Butylenoxid, Styroloxid, Vinyloxiran, Glycidol, Allylglycidylether sowie deren Mischungen. Der Aufbau der Polyetherketten durch Alkoxylierung kann mit nur einem monomeren Alkylenoxid durchgeführt werden oder auch statistisch oder blockweise mit zwei oder mehreren unterschiedlichen monomeren Alkylenoxiden erfolgen. Bevorzugt eingesetzt werden Ethylenoxid, Propylenoxid, 1,2-Butylenoxid, 2,3-Butylenoxid oder deren Mischungen.

. Optional wird die Polymerisation der Alkylenoxide in Gegenwart von aktive Wasserstoffatome aufweisenden Starterverbindungen durchgeführt. Hierdurch werden Polyetherpolyole erhalten, die zur Herstellung von Polyurethan-Werkstoffen geeignet sind. Als aktive Wasserstoffatome aufweisende Starterverbindungen werden Verbindungen mit Molekulargewichten von 18 bis 1.000 und 1 bis 8 Hydroxyl-, Thiolund/oder Aminogruppen verwendet. Beispiele sind Ethylenglykol, Diethylenglykol, Triethylenglykol, 1,2-Propylenglykol, 1,4-Butandiol, Hexamethylenglykol, Bisphenol A, Trimethylolpropan, Glycerin, Pentaerythrit, Sorbit, Rohrzucker, abgebaute Stärke, Wasser, Methylamin, Ethylamin, Propylamin, Butylamin, Anilin, Benzylamin, o- oder p-Toluidin, α,β-Naphthylamin, Ammoniak, Ethylendiamin, Propylendiamin, 1,4-Butylendiamim, 1,2-, 1,3-, 1,4-, 1,5- oder 1,6-Hexamethylendiamin, o-, m- oder p-Phenylendiamin, 2,2'-, 2,4'- oder 4,4'-Diaminodiphenylmethan oder Diethylendiamin

Die durch die erfindungsgemäßen Katalysatoren katalysierte Polymerisation der Alkylenoxide erfolgt im Allgemeinen bei Temperaturen von -20 bis 200°C, bevorzugt 0 bis 180°C, besonders bevorzugt 20 bis 160°C. Die Reaktion kann bei Gesamtdrücken von 0,001 bis 20 bar durchgeführt werden. Die Polymerisation kann in Substanz oder in einem inerten, organischen Lösungsmittel, wie z.B. Cyclohexan, Toluol, Xylol, Tetrahydrofuran, Diethylether, Dimethoxyethan, Dioxan und/oder chlorierten Kohlenwasserstoffen, wie Methylenchlorid, Chloroform oder 1,2-Dichlorpropan, durchgeführt werden. Die Menge an Lösungsmittel beträgt üblicherweise 10 bis 30 Gew.-%, bezogen auf die Menge des herzustellenden Polyalkylenoxids.

Die Katalysatorkonzentration wird so gewählt, dass unter den gegebenen Reaktionsbedingungen eine gute Beherrschung der Polymerisationsreaktion möglich ist. Die Katalysatorkonzentration beträgt im Allgemeinen 0,001 Gew.-% bis 2 Gew.-%, bevorzugt 0,01 bis 1,5 Gew.-%, besonders bevorzugt 0,1 bis 1 Gew.-%, bezogen auf die Menge des herzustellenden Polyalkylenoxids.

Die Reaktionszeiten betragen einige Minuten bis zu mehreren Stunden. Der Polyalkoxylierungsprozess kann kontinuierlich, in einem Batch- oder in einem Semi-Batch-Verfahren durchgeführt werden.

Die (zahlenmittleren) Molekulargewichte der mit den erfindungsgemäßen Katalysatoren herstellbaren Polyalkylenoxide betragen 200 bis 500 000 g/mol, bevorzugt 500 bis 50 000 g/mol, besonders bevorzugt 1 000 bis 20 000 g/mol. Die durch die erfindungsgemäßen Katalysatoren hergestellten Polyalkylenoxide zeichnen sich durch enge Molmassenverteilungen bzw. niedrige Polydispersitäten (M_{w}/Mₙ) aus. Die Polydispersitäten sind im Allgemeinen kleiner als 1,5 und vorzugsweise kleiner als 1,2. Die Molmassenwerte und Polydispersitäten werden üblicherweise durch eine mit entsprechenden Polyalkylenoxid-Standards geeichte Gelpermeationschromatographie (GPC) bestimmt.

Bei der Polymerisation von Propylenoxid mit den erfindungsgemäßen Katalysatoren werden ataktische Polypropylenoxide erhalten. Die Bestimmung der Taktizität erfolgt üblicherweise mittels ¹³C-NMR-Spektroskospie.

### Beispiele

### Beispiel A Katalysatorsynthese

### Herstellung von 1-(2-Phenolato)-3-(2-hydroxyphenyl)-propan-3-on-1-onatotitandichlorid (Katalysator A)

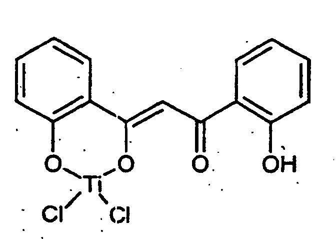

285 mg (1,50 mmol) Titantetrachlorid wurden unter Schutzgas (Argon) in 10 ml Dichlormethan gelöst und bei Raumtemperatur mit 384 mg (1,50 mmol) 1,3-Bis(2-hydroxyphenyl)-1,3-propandion versetzt. Nach wenigen Minuten bildete sich ein roter Niederschlag aus, der nach zwei Stunden Reaktionszeit abfiltriert, mit wenig Pentan gewaschen und am Ölpumpenvakuum getrocknet wurde.
Ausbeute: 524 mg (1,40 mmol, 94 %)

### Beispiele 1-9 Herstellung von Polypropylenoxiden

37,3 mg (0,10 mmol) Katalysator A wurden unter Schutzgas (Argon) in ein Schlenkgefäß eingewogen und anschließend bei Raumtemperatur mittels einer Spritze mit 8,3 g (143 mmol) Propylenoxid versetzt. Dann wurde der Polymerisationsansatz für einen definierten Zeitraum bei Raumtemperatur unter Argon gerührt. Nach Ablauf der Reaktionszeit wurde nicht-umgesetztes Propylenoxid im Ölpumpenvakuum entfernt. Man erhielt hochviskose, ölartige Flüssigkeiten, die ohne Abtrennung des Katalysators charakterisiert wurden. Die Ergebnisse sind in Tabelle 1 zusammengefasst.

**Tabelle 1:**

| Propylenoxid-Polymerisationen mit Katalysator A | | | | | | |
|---|---|---|---|---|---|---|
| **Bsp.** | **Zeit [h]** | **Ausbeute [g]** | **Umsatz [%]** | **M**_{**n**} **[g/mol]** a) | **M**_{**w**} **[g/mol]** a) | **M**_{**w**}**/M**_{**n**} a) |
| 1 | 0,5 | 3,48 | 41,9 | 9 823 | 10 601 | 1,0793 |
| 2 | 1 | 4,04 | 48,6 | 10 796 | 11 555 | 1,0703 |
| 3 | 2 | 4,69 | 56,5 | 12 963 | 13 917 | 1,0736 |
| 4 | 3 | 5,02 | 60,5 | 11 863 | 12 737 | 1,0736 |
| 5 | 4 | 5,43 | 65,4 | 12 047 | 12 922 | 1,0726 |
| 6 | 5 | 5,79 | 69,8 | 12 342 | 13 281 | 1,0760 |
| 7 | 6 | 6,06 | 73,0 | 12 525 | 13 357 | 1,0664 |
| 8 | 15 | 6,52 | 78,6 | 13 324 | 14 213 | 1,0667 |
| 9 | 48 | 7,13 | 85,9 | 14 340 | 15 440 | 1,0767 |

| | | | | | | |
|---|---|---|---|---|---|---|
| ^{a,} bestimmt mittels GPC (Elutionsmittel THF, Eichung mit Polypropylenoxid-Standards) | | | | | | |

Die mit Katalysator A erhaltenen Polypropylenoxide besitzen relativ hohe zahlenmittlere Molmassen mit Werten zwischen etwa 10 000 und 15 000 g/mol und sehr enge Molmassenverteilungen mit Polydispersitäten M_{w}/Mₙ < 1,08.

Das Polypropylenoxid aus Beispiel 2 wurde zusätzlich mittels ¹³C-NMR-Spektroskopie untersucht. Die ¹³C-NMR-Analyse ergab, dass ein ataktisches Produkt mit statistischer Verteilung isotaktischer und syndiotaktischer Diaden vorliegt. Die für basische oder saure Katalyse charakteristischen Nebenprodukte konnten nicht detektiert werden.

## Patentansprüche

1. Katalysatoren der allgemeinen Formel (I) 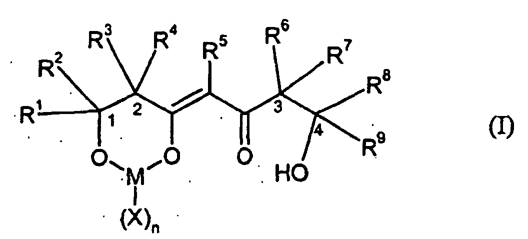 in der
R¹ - R⁹ unabhängig voneinander H, eine substituierte oder unsubstituierte, lineare oder verzweigte C₁-C₂₀-Alkylgruppe, eine substituierte oder unsubstituierte C₅-C₂₀-Arylgruppe, eine substituierte oder unsubstituierte C₅-C₂₀-Aralkylgruppe, eine Acylgruppe, eine Alkoxidgruppe, F, Cl, Br, I, CN, oder NO₂ bedeuten, oder R² und R³ und/oder R⁷ und R⁸ gemeinsam ein ankondensiertes C₃-C₂₀-cycloaliphatisches Ringsystem bilden, oder R¹ bis R⁴ und/oder R⁶ bis R⁹ gemeinsam ein ankondensiertes aromatisches Ringsystem bilden;
M ein Metall in der Oxidationsstufe II - VII ist;
X F, Cl, Br, I, H, CN, eine substituierte oder unsubstituierte, lineare oder verzweigte C₁-C₂₀-Alkylgruppe, eine substituierte oder unsubstituierte C₅-C₂₀-Arylgruppe, eine substituierte oder unsubstituierte C₅-C₂₀-Aralkylgruppe, eine Acylgruppe, eine Alkoxidgruppe, eine Thiolatgruppe oder eine Dialkylaminogruppe bedeutet;
n 0, 1, 2, 3, 4 oder 5 ist, wobei n so gewählt wird, dass die Elektroneutralität der Metallkomplexverbindung gewährleistet ist.

2. Katalysatoren gemäß Anspruch 1 der allgemeinen Formel (II) 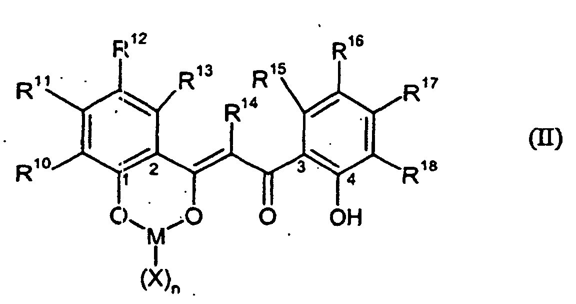 in der
R¹⁰-R¹⁸ unabhängig voneinander H, eine substituierte oder unsubstituierte, lineare oder verzweigte C₁-C₂₀-Alkylgruppe, eine substituierte oder unsubstituierte C₅-C₂₀-Arylgruppe, eine substituierte oder unsubstituierte C₅-C₂₀-Aralkylgruppe, eine Acylgruppe, eine Alkoxidgruppe, eine Thiolatgruppe, F, Cl, Br, I, CN, NO₂, oder Teile ankondensierter cycloaliphatischer oder aromatischer Ringsysteme mit 3-20 C-Atomen sind;
M, X, n die in Anspruch 1 definierte Bedeutung haben.

3. Katalysatoren gemäß Anspruch 2, bei denen
R¹⁰-R¹⁸ unabhängig voneinander H, lineare oder verzweigte C₁-C₆-Alkylgruppen, F, Cl, Br, I oder Bestandteile ankondensierter cycloaliphatischer oder aromatischer Ringsysteme mit 3 bis 15 C-atomen sind;
M Zn(II), Al(III), Ti(IV), Zr(IV) oder Hf(IV) ist;
X F, Cl, Br oder I ist.

4. Verfahren zur Polymerisation von Alkylenoxiden, bei dem die Alkylenoxide in Gegenwart eines Katalysators gemäß Anspruch 1, 2 oder 3 polymerisiert werden.

5. Verwendung der Katalysatoren gemäß Anspruch 1, 2 oder 3 bei der Polymerisation von Alkylenoxiden

## Claims

1. Catalysts of general formula (I) 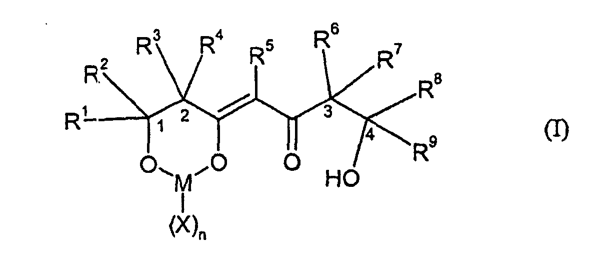 wherein
R¹ - R⁹, independently of each other, represent H, a substituted or unsubstituted, straight or branched C₁-C₂₀ alkyl group, a substituted or unsubstituted C₅-C₂₀ aryl group, a substituted or unsubstituted C₅-C₂₀ aralkyl group, an acyl group, an alkoxide group, F, Cl, Br, I, CN or NO₂, or R² and R³ and/or R⁷ and R⁸ together form a partially condensed C₃-C₂₀ cycloaliphatic ring system, or R¹ to R⁴ and/or R⁶ to R⁹ together form a partially condensed aromatic ring system;
M is a metal at oxidation stage II - VII;
X represents F, Cl, Br, I, H, CN, a substituted or unsubstituted, straight or branched C₁-C₂₀ alkyl group, a substituted or unsubstituted C₅-C₂₀ aryl group, a substituted or unsubstituted C₅-C₂₀ aralkyl group, an acyl group, an alkoxide group, a thiolate group or a dialkylamino group;
n is 0, 1, 2, 3, 4 or 5 and is chosen so that the electric neutrality of the metal complex compound is guaranteed.

2. Catalysts according to claim 1 of general formula (II) 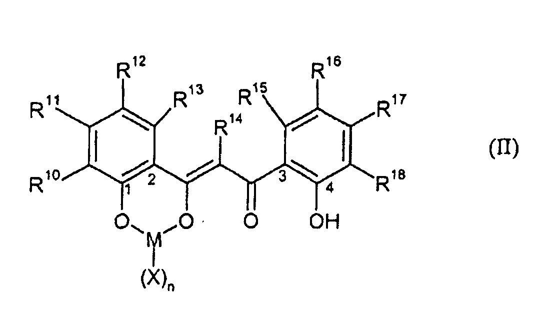 wherein
R¹⁰ - R¹⁸, independently of each other, are H, a substituted or unsubstituted, straight or branched C₁-C₂₀ alkyl group, a substituted or unsubstituted C₅-C₂₀ aryl group, a substituted or unsubstituted C₅-C₂₀ aralkyl group, an acyl group, an alkoxide group, a thiolate group, F, Cl, Br, I, CN, NO₂ or constituents of partially condensed cycloaliphatic or aromatic ring systems with 3-20 C atoms.
M, X and n have the meaning defined in claim 1.

3. Catalysts according to claim 2, wherein
R¹⁰ to R¹⁸, independently of each other, are H, straight or branched C₁-C₆ alkyl groups, F, Cl, Br, I or constituents of partially condensed cycloaliphatic or aromatic ring systems with 3-15 C atoms;
M is Zn(II), Al(III), Ti(IV), Zr(IV) or Hf(IV);
X is F, Cl, Br or I.

4. Method of polymerising alkylene oxides, wherein the alkylene oxides are polymerised in the presence of a catalyst according to claim 1,2 or 3.

5. Use of the catalysts according to claim 1, 2 or 3 in the polymerisation of alkylene oxides.

## Revendications

1. Catalyseurs de formule générale (I) 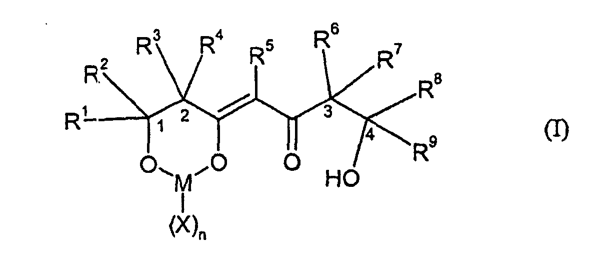 dans laquelle
R¹-R⁹ représentent, indépendamment les uns des autres, H, un groupe alkyle en C₁-C₂₀ linéaire ou ramifié, substitué ou non substitué, un groupe aryle en C₅-C₂₀ substitué ou non substitué, un groupe aralkyle en C₅-C₂₀ substitué ou non substitué, un groupe acyle, un groupe alcoxy, F, Cl, Br, I, CN ou NO₂, ou R² et R³ et/ou R⁷ et R⁸ forment ensemble un système cyclique cycloaliphatique en C₃-C₂₀ condensé, ou R¹ à R⁴ et/ou R⁶ à R⁹ forment ensemble un système cyclique aromatique condensé;
M est un métal à l'état d'oxydation II - VII;
X représente F, CI, Br, I, CN, un groupe alkyle en C₁-C₂₀ linéaire ou ramifié, substitué ou non substitué, un groupe aryle en C₅-C₂₀ substitué ou non substitué, un groupe aralkyle en C₅-C₂₀ substitué ou non substitué, un groupe acyle, un groupe alcoxy, un groupe thiolate ou un groupe dialkylamino;
n est 0, 1, 2, 3, 4 ou 5, n étant choisi de façon que la neutralité électrique du composé complexe métallique soit assurée.

2. Catalyseurs selon la revendication 1, de formule générale (II): 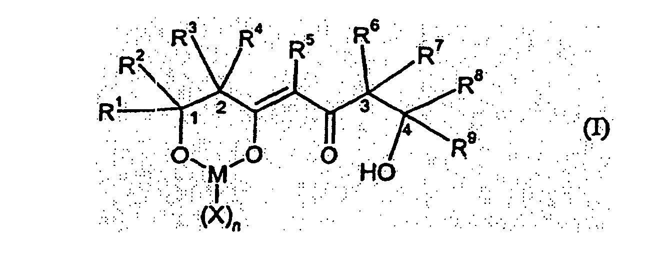 dans laquelle
R¹⁰-R¹⁸ représentent, indépendamment les uns des autres, H, un groupe alkyle en C₁-C₂₀ linéaire ou ramifié, substitué ou non substitué, un groupe aryle en C₅-C₂₀ substitué ou non substitué, un groupe aralkyle en C₅-C₂₀ substitué ou non substitué, un groupe acyle, un groupe alcoxy, un groupe thiolate, F, Cl, Br, I, CN, NO₂, ou des éléments de systèmes cycliques cycloaliphatiques ou aromatiques condensés de 3 à 20 atomes de carbone;
M, X, n ont la signification définie dans la revendication 1.

3. Catalyseurs selon la revendication 2, dans lesquels:
R¹⁰-R¹⁸ représentent, indépendamment les uns des autres, H, des groupes alkyle en C₁-C₆ linéaires ou ramifiés, F, Cl, Br, I ou des éléments de systèmes cycliques cycloaliphatiques ou aromatiques condensés de 3 à 15 atomes de carbone;
M est Zn(II), Al(III), Ti(IV), Zr(IV) ou Hf(IV);
X est F, Cl, Br ou I.

4. Procédé de polymérisation d'oxydes d'alkylène, dans lequel on polymérise les oxydes d'alkylène en présence d'un catalyseur selon la revendication 1, 2 ou 3.

5. Utilisation des catalyseurs selon la revendication 1, 2 ou 3 dans la polymérisation d'oxydes d'alkylène.
